# EUROPÄISCHE PATENTANMELDUNG

(11) **EP 4 379 494 A1**
(43) Veröffentlichungstag der Anmeldung: **05.06.2024**
(21) Anmeldenummer: 23213840.4
(22) Anmeldetag: 01.12.2023
(51) Int. Cl.: G05D 23/19

(54) **HEIZUNGSTHERMOSTAT**

(30) Priorität: 04.12.2022 DE 202022106785 U
(71) Anmelder: Blossom-IC Intelligent Controls AG, 87700 Memmingen (DE)
(72) Erfinder: Suic, Orhan, 87700 Memmingen (DE)
(74) Vertreter: Baumann, Rüdiger Walter

(57) **Zusammenfassung**

Die Erfindung betrifft ein Heizungsthermostat umfassend an oder in einem Gehäuse angeordnet: eine als interaktiver, berührungsempfindlicher Bildschirm, insbesondere Touchscreen, ausgebildete Eingabeeinheit, wenigstens zwei Sensoren mit Erfassungsfeldern zur Erfassung von Umgebungsparametern des Heizungsthermostats, eine Datenverarbeitungseinheit, eine Steuereinheit und eine Erfassungseinheit für Heizungsparameter einer dem Heizungsthermostat unmittelbar zugeordneten Heizeinheit, insbesondere eines Heizkörpers und/oder einer Fußbodenheizung und/oder eines übergeordneten Heizungssystems, wobei die Sensoren relativ zur Eingabeeinheit bzw. dem Bildschirm derart angeordnet sind, dass unabhängig von einer Einbaulage des Heizungsthermostats, die Erfassungsfelder so ausgerichtet sind, dass eine im Wesentlichen vollständige Erfassung aller Umgebungsparameter erfolgt und ein Heizungssystem aufweisend mehrere Verbraucher und wenigstens ein den Verbrauchern jeweils zugeordnetes Heizungsthermostat.

## Beschreibung

Die automatische Temperaturregelung von Räumen gewinnt zunehmend an Bedeutung. Insbesondere aus Energiespargründen ist es vorteilhaft, wenn eine Temperatureinstellung aufgrund Erfassung möglichst vieler Parameter erfolgt, um ein unnötiges Beheizen eines Raumes zu vermeiden.

Bekannt sind Heizungsthermostate, bei denen über eine Eingabeeinheit Heizungsparameter eingestellt werden können. Aus dem Stand der Technik ist zudem ein Heizungsthermostat bekannt, bei dem ein einziger Sensor angeordnet ist, der Raumparameter, beispielsweise die Anwesenheit von Personen erfasst, und anhand dieser Parameter eine Steuerung der Raumtemperatur vornimmt. Nachteilig an den bekannten Heizungsthermostaten mit Eingabeeinheit ist jedoch, dass sich die dort vorgesehenen Eingabeeinrichtungen als schwer bedienbar und unübersichtlich erweisen. Zudem erlaubt die Anordnung von nur einem einzigen Sensor lediglich die Überwachung des Raumes in eine Richtung. Wird das Heizungsthermostat beispielsweise in einer Wandnische oder dergleichen eingebaut, kommt es zu einer Abschattung des Sensors und keiner zufriedenstellenden Erfassung von Raumparametern.

Aufgabe der vorliegenden Erfindung ist es daher, ein verbessertes Heizungsthermostat zur Verfügung zu stellen, dass zum einen eine wesentlich benutzerfreundlichere Einstellung der gewünschten Parameter zulässt, zum anderen eine bessere Erfassung der Raum- und Umgebungsparameter zulässt.

Diese Aufgabe wird gelöst durch ein Heizungsthermostat mit den Merkmalen des Anspruchs 1. Vorteilhafte Weiterbildungen des Heizungsthermostats sind Gegenstand der abhängigen Ansprüche.

Das erfindungsgemäße Heizungsthermostat umfasst an oder in einem Gehäuse angeordnet wenigstens eine Eingabeeinheit für Heizungsparameter, wie beispielsweise die gewünschte Raumtemperatur, die Heizdauer, die Aufheizgeschwindigkeit und die Einordnung des Heizungsthermostats in ein übergeordnetes Heizungssystem. Die Eingabeeinheit ist dabei als interaktiver, berührungsempfindlicher Bildschirm, insbesondere Touchscreen ausgebildet. Dieser Touchscreen ermöglicht, in von beispielsweise Smartphones oder Touchscreens bekannter Art und Weise, die einfache und benutzerfreundliche sowie intuitive Einstellung der Heizungsparameter. Der Benutzer muss sich nicht über Wippschalter oder dergleichen durch verschiedene Menüs bewegen, um die gewünschten Einstellungen vorzunehmen. Der interaktive Bildschirm stellt die Informationen klar und übersichtlich dar. Allein durch Berührung des Bildschirms können dann die Einstellungen vorgenommen werden.

Das erfindungsgemäße Heizungsthermostat umfasst des Weiteren an oder in dem Gehäuse angeordnet wenigstens zwei Sensoren, die jeweils ein Erfassungsfeld zur Erfassung von Umgebungsparametern des Heizungsthermostats aufweisen. Vorteilhaft an dieser Ausgestaltung ist, dass je nach Einbaulage des Heizungsthermostat wenigstens einer der Sensoren eine ein großes Erfassungsfeld für Raumparameter bzw. Umgebungsparameter des Heizungsthermostats aufweist und es nicht zu einer nachteiligen Abschattung des Sensors in Abhängigkeit von der Einbaulage kommt.

Das erfindungsgemäße Heizungsthermostat umfasst ferner eine Datenverarbeitungseinheit für zum einen die Umsetzung der über den Bildschirm bzw. Touchscreen eingegebenen Steuerbefehle und zum anderen die durch die wenigstens zwei Sensoren erfassten Umgebungsparameter des Heizungsthermostats. Zur Umsetzung der in der Datenverarbeitungseinheit errechneten Steuerwerte umfasst das Heizungsthermostat zusätzlich eine Steuereinheit für das Heizungsthermostat, beispielsweise für den Öffnungsgrad des Thermostatventils sowie das automatische, parametergesteuerte Einstellen des Heizungsthermostats. Letztlich umfasst das erfindungsgemäße Heizungsthermostat auch eine Erfassungseinheit für Heizungsparameter einer dem Heizungsthermostat unmittelbar zugeordneten Heizeinheit insbesondere eines Heizkörpers, einer Fußbodenheizung und/oder eines übergeordneten Heizungssystems. Eine derartige Erfassungseinheit kann beispielsweise ein Raumtemperaturfühler, ein Vorlauf/Rücklauffühler oder dergleichen sein, der im Wesentlichen die Temperatur des Heizmediums vor oder nach dem Eintritt in die Heizeinheit, beispielsweise des Heizkörpers erfasst. Erfindungsgemäß ist vorgesehen, dass die zuvor genannten Sensoren relativ zur Eingabeeinheit, d. h. dem interaktiven berührungsempfindlichen Bildschirm derart angeordnet sind, dass unabhängig von einer Einbaulage des Heizungsthermostats die Erfassungsfelder der Sensoren so ausgerichtet sind, dass eine im wesentliche ungehinderte und umfassende Erfassung von Umgebungsparametern mit einer größtmöglichen Raumerfassung erfolgt oder erfolgen kann.

In einer als vorteilhaft angesehenen Weiterbildung der Erfindung erfolgt eine Steuerung der Temperaturregelung des Heizkörpers und/oder der Fußbodenheizung oder des übergeordneten Heizungssystems basierend auf den erfassten Heizungs- und Umgebungsparametern, die durch das Thermostat und die dort angeordneten Sensoren sowie die im Thermostat vorgesehene Erfassungseinheit für Heizungsparameter erfolgt.

Als günstig wird angesehen, wenn der interaktive, berührungsempfindliche Bildschirm eine Größe von zwischen 3 cm x 5 cm, bevorzugt von zwischen 3,2 cm x 4,3 cm aufweist. Diese als vorteilhaft angesehene Größe erlaubt zum einen eine einfache Bedienung des Bildschirms, zum anderen eine klare und deutliche Darstellung der jeweiligen Eingabefelder sowie der eingegebenen Parameter. Gleichzeitig verhindert die vorgenannte Größe des Bildschirms, dass die Baumaße des Thermostats über die herkömmlicher Thermostate ohne Eingabeeinheit hinausgeht. Es wird somit in einfacher Art und Weise eine Möglichkeit zur Verfügung gestellt, bestehende Thermostate ohne Eingabeeinheit durch das erfindungsgemäße Thermostat mit Eingabeeinheit auszutauschen, ohne bauliche Veränderungen im Bereich des Heizkörpers oder der Heizeinheit vornehmen zu müssen. Die Benutzerfreundlichkeit steht hierbei im Vordergrund.

Im Zusammenhang mit den zuvor beschriebenen Sensoren wird es als günstig angesehen, wenn diese Erfassungsfelder bzw. Erfassungsbereiche mit einem Erfassungswinkel relativ zur Eingabeeinheit aufweisen und die Erfassungswinkel der einzelnen Sensoren bei zwischen 0° und 360°, insbesondere zwischen 1° und 180° liegen. Als günstig erweist es sich, wenn eine wenigstens teilweise Überlappung der Erfassungsbereiche der wenigstens zwei Sensoren erfolgt. Die Erfassungsbereiche ergänzen sich so zu einem wesentliche größeren gemeinsamen Erfassungsbereich und verbessern die Erfassung der Umgebungsparameter wesentlich.

Eine als günstig angesehene Weiterbildung der Erfindung sieht vor, dass die Erfassungsbereiche derart abgestimmt sind, dass sich ein einziger Erfassungsbereich mit einem Erfassungswinkel relativ zur Eingabeeinheit von zwischen 0° und 360° insbesondere zwischen 1° und 180° ergibt. Die Abstimmung der Erfassungsbereiche erfolgt dabei bevorzugt über die Steuereinheit oder in einem automatischen Prozess bei Erstinbetriebnahme. Selbstverständlich ist es auch möglich, dass eine kontinuierliche Abstimmung über die Steuereinheit erfolgt. Auch denkbar ist eine einmalige Konfiguration, bevorzugt auch automatisch nach oder bei der ersten Inbetriebnahme des Heizungsthermostats.

Die Sensoren, die im erfindungsgemäßen Heizungsthermostat vorgesehen sind, sind bevorzugt als Bewegungssensoren, Infrarotsensoren, Radarsensoren, Temperatursensoren oder Ultraschallsensoren oder Kombinationen daraus ausgebildet, ohne die Erfindung hierauf zu beschränken.

Als günstig wird angesehen, wenn die Sensoren zwei getrennte Überwachungsebenen aufweisen. Dieser Ausgestaltung der Sensoren erlaubt beispielsweise die Raumüberwachung auf verschiedenen Ebenen. Eine Ansteuerung des Heizungsthermostats erfolgt in diesem Fall nur dann, wenn beide Überwachungsebenen Bewegungen, d. h. die Anwesenheit von Menschen im Raum detektieren. Vermieden wird so, dass beispielsweise durch im Raum befindliche Haustiere eine Aktivierung des Heizungsthermostat und eine Änderung des Betriebszustandes, das heißt insbesondere der Raumtemperatur, erfolgt, die unter Umständen unerwünscht ist.

Eine als vorteilhaft angesehene Weiterbildung der Erfindung sieht vor, dass die Sensoren zur Bewegungsüberwachung eines Raumes verwendet werden. Bei dieser Bewegungsüberwachung kann beispielsweise bei Abwesenheit der Bewohner festgestellt werden, ob sich Unbefugte, beispielsweise Einbrecher, im Raum bewegen. Wird eine nicht autorisierte Bewegung im Raum durch die Sensoren erfasst, kann beispielsweise ein Warnsignal ausgegeben werden. Dieses Warnsignal kann in Form der Ansteuerung einer Alarmanlage erfolgen. Alternativ hierzu kann eine Bewegungsmitteilung an den abwesenden Bewohner ausgegeben werden, und dieser dann die entsprechenden Schritte einleiten. Eine Abstimmung zwischen den Bewegungssensoren und einer Überwachungskamera, die im Raum angeordnet ist kann ebenfalls vorgenommen werden, um Bilder des Raumes bei nicht autorisierte Bewegung im Raum an den berechtigten Bewohner weiterzugeben, sodass dieser basierend auf dieser Information die nächsten Schritte in die Wege leiten kann.

In einer vorteilhaften Weiterbildung des erfindungsgemäßen Heizungsthermostats ist in dem Gehäuse wenigstens ein Kameramodul zur Raumüberwachung vorgesehen. Dieses ist automatisch, beispielsweise bei durch die vorgenannten Bewegungssensoren erfasster unautorisierter Bewegung oder manuell, beispielsweise bei Fernzugriff durch einen Nutzer aktivierbar und kann zur Raumüberwachung beitragen.

Eine als günstig angesehene Ausführungsform der Erfindung sieht vor, dass über die Eingabeeinheit eine Steuerung der unmittelbar zugeordneten Heizungseinheit und oder des übergeordneten Heizungssystems erfolgt.

In einer erfindungsgemäßen Weiterbildung ist vorgesehen, dass in der im Heizungsthermostat vorgesehenen Datenverarbeitungseinheit eine Verarbeitung der von den Sensoren erfassten Umgebungsparameter, beispielsweise Bewegungen und von der Erfassungseinheit erfassten Heizungsparametern, beispielsweise Raumtemperatur, Vorlauf- oder Rücklauftemperatur, erfolgt und ein automatischer Abgleich mit Voreingestellten Heizungsparametern der dem Heizungsthermostat unmittelbar zugeordneten Heizeinheit vorgenommen wird. Zusätzlich oder alternativ hierzu kann basierend auf den verarbeiteten Daten ein automatischer Abgleich im übergeordneten Heizungssystem durchgeführt werden. Dieser Abgleich erfolgt dabei adaptiv und unter Berücksichtigung des gesamten Heizungssystems (adaptiver hydraulischer Abgleich).

Als besonders vorteilhaft wird es in diesem Zusammenhang angesehen, wenn die Datenverarbeitungseinheit die über das Heizungsthermostat erfassten Umgebungs- und Heizungsparameter insbesondere beim Betrieb der Raum- und/oder Fußbodenheizung, an eine übergeordnete Steuereinheit als Eingangswerte für die Durchführung eines adaptiven hydraulischen Abgleichs im gesamten Heizungssystems weitergibt. Das Heizungsthermostat gemäß der Erfindung ist in diesem Fall Teil des Heizungssystems und stellt die Eingangswerte für die Durchführung des adaptiven hydraulischen Abgleichs für den jeweiligen Raum, in dem das erfindungsgemäße Heizungsthermostat betrieben wird, zur Verfügung.

Die zuvor genannte übergeordnete Steuereinheit kommuniziert dabei bevorzugt kabellos mit dem Heizungsthermostat. In einer alternativen Ausführungsform, besteht auch die Möglichkeit, dass die übergeordnete Steuereinheit in das Heizungsthermostat integriert vorgesehen ist und die Steuerung des adaptiven hydraulischen Abgleichs im Heizungssystems über das Heizungsthermostat erfolgt.

Eine vorteilhafte Ausführungsform der Erfindung sieht vor, dass das Heizungsthermostat als Teil eines einen adaptiven hydraulischen Abgleich zu lassenden Heizungssystems vorgesehen ist und über die Eingabeeinheit die Eingabe von Eingangsparametern für den adaptiven hydraulischen Abgleich erfolgt. Die Eingabe der Eingangsparameter kann dabei auch automatisch erfolgen.

Als günstig wird angesehen, wenn in der Steuereinheit mindestens zwei Benutzungsebenen hinterlegt sind, die über den berührungsempfindlichen Bildschirm der Eingabeeinheit aufgerufen werden können. Die Auswahl bzw. der Zugriff und die Bearbeitung der jeweiligen Benutzungsebenen erfolgt dann vorteilhafter Weise über den berührungsempfindlichen Bildschirm der Eingabeeinheit. Dies trägt auch zur Benutzerfreundlichkeit des erfindungsgemäßen Heizungsthermostats bei, da der Anwender sämtliche Einstellungen über den berührungsempfindlichen Bildschirm vornehmen kann, ohne hier zusätzliche Geräte oder (Daten)Verbindungen herstellen zu müssen.

Als vorteilhafte Weiterbildung wird angesehen, wenn die Steuerung des Heizungsthermostats wahlweise über den berührungsempfindlichen Bildschirm der Eingabeeinheit oder eine gesonderte, beispielsweise auf einem Mobilgerät oder Computer installierte Nutzerapplikation (App) oder eine Weboberfläche erfolgt. Der Benutzer greift dabei direkt über den Bildschirm des Thermostats oder die jeweilige App bzw. Weboberfläche auf das Thermostat zu und führt die Steuerung bzw. Einstellung der jeweiligen Parameter durch.

Als günstig wird angesehen, wenn eine kabellose Kopplung des Heizungsthermostats mit weiteren gleichartigen Heizungsthermostaten erfolgt. Zusätzlich oder alternativ kann ein Kopplung der erfindungsgemäßen Heizungsthermostat über eine übergeordnete Steuereinheit und oder ein Mobilgerät oder einen Computer erfolgen. Hierzu ist ein im Heizungsthermostat integriertes Kommunikationsmodul, insbesondere ein W-LAN, Funk- oder Bluetooth-Modul oder ein sonstiges, dem Fachmann hinlänglich bekanntes Kommunikationsmodul vorgesehen.

Eine vorteilhafte Weiterbildung des Heizungsthermostats sieht vor, dass im Heizungsthermostat eine Speichereinheit für ermittelte Nutzungsdaten vorgesehen ist. In dieser können, auch von einer übergeordneten Speichereinheit unabhängig, Nutzungsdaten wie Betriebsdauer, eingestellte Temperaturen, Temperaturverläufe, Wärmeverbrauch, Nutzerprofile, Außentemperatur, Anwesenheits- bzw. Abwesenheitsdauer eines Nutzer oder dergleichen, die beim Betrieb des Heizungsthermostats durch dieses erfasst werden, abgespeichert und entweder direkt ausgelesen oder an die übergeordnete Einheit weitergegeben werden.

Eine als günstig angesehene Weiterbildung des Heizungsthermostats sieht vor, dass diese eine Bedienung des Heizungsthermostats über eine Sprach- und/oder Gestensteuerung erfolgt. Das erfindungsgemäße Heizungsthermostat weist hierzu wenigstens einen entsprechenden Erfassungssensor und eine Verarbeitungseinheit für die erfassten Signale auf. Die Bedienung des Thermostats wird hierdurch wesentlich vereinfacht.

Die Erfindung umfasst auch ein Heizungssystem, das mehrere Verbraucher mit jeweils wenigstens einem den Verbrauchern zugeordneten Heizungsthermostat gemäß der vorher beschriebenen Erfindung aufweist. Dabei sind die Verbraucher getrennt voneinander bzw. in getrennten Räumen angeordnet und eine Kopplung der Verbraucher bzw. des zugeordneten Heizungsthermostats mit einer zentralen Steuereinheit oder einem Gateway oder einer jeweils den Verbraucher zugeordneten Steuereinheit oder einer übergeordneten Steuereinheit vorgesehen. Das erfindungsgemäße Heizungsthermostat ist in diesem Fall ein zentrales Element des Heizungssystems und stellt die für die Durchführung des adaptiven hydraulischen Abgleichs notwendigen Daten und Parameter zur Verfügung. Gleichzeitig dient das Heizungsthermostat dazu die jeweils heizeinheitsspezifischen Einstellungen vorzunehmen, die durch oder bei Durchführung des adaptiven hydraulischen Abgleichs notwendig sind.

In einer als vorteilhaft angesehenen Weiterbildung der Erfindung ist die Integration des Heizungssystems in ein mehrere Abschnitte aufweisendes Verteilernetz vorgesehen. Das Verteilernetz weist dabei bevorzugt einen oder mehrere unabhängige Heizstränge mit jeweils wenigstens einem eigenen Heizungssystem auf. Die Abstimmung zwischen den Heizungssystemen erfolgt dann über eine zentrale Steuereinheit, die durch über erfindungsgemäße Heizungsthermostat erfasste Parameter mit Daten gespeist wird und den Abgleich zwischen den jeweiligen Heizsträngen des Verteilernetzes vornimmt.

In diesem Zusammenhang wird es als günstig angesehen, wenn das Verteilernetz wenigstens eine Netzsteuereinheit für einen dynamischen adaptiven hydraulischen Abgleich im gesamten Verteilernetz aufweist. Die Netzsteuereinheit greift dabei insbesondere unmittelbar über die Steuereinheiten der jeweiligen Heizungssysteme oder über die zentralen Steuereinheiten des Heizungssystems auf die einzelnen Abschnitte zu. Es besteht in diesem Fall die Möglichkeit, dass das erfindungsgemäße Heizungsthermostat als Steuereinheit, zentrale Steuereinheit oder in einem weiteren Ausführungsbeispiel als Netzsteuereinheit vorgesehen ist. In dieser Ausführungsform ist vorgesehen, dass eines der Heizungsthermostate die Rolle einer zentralen Steuereinheit oder eines Gateways, d. h. einer Netzsteuereinheit übernimmt und die anderen weiteren Heizungsthermostate automatisch steuert. In diesem Zusammenhang wird es als günstig angesehen, wenn in der Steuereinheit, den zentralen Steuereinheiten oder den einzelnen Steuereinheiten ein thermisches Zeitverhalten über abrufbare SOLL-Wert-Profile einstellbar ist und der adaptive hydraulische Abgleich in Abhängigkeit von den SOLL-Wert-Profilen durchführbar ist. Dabei werden die SOLL-Wert-Profile über die Eingabeeinheit, insbesondere den interaktiven, berührungsempfindlichen Bildschirm des erfindungsgemäßen Heizungsthermostats erfasst und/oder gesteuert.

Insgesamt ist vorgesehen, dass im erfindungsgemäßen Heizungssystem eine Kopplung von mehreren Heizungsthermostaten miteinander erfolgt. Diese Kopplung kann dabei insbesondere kabellos beispielsweise über WLAN, Funk, Bluetooth oder ein Telefon- oder Mobilfunknetz erfolgen. Die jeweils geeigneten Verbindungssysteme sind dem Fachmann hinlänglich bekannt und können in einfacher Art und Weise im erfindungsgemäßen Heizungsthermostat implementiert werden.

Die Erfindung wird nachstehend anhand der in den beigefügten Abbildungen dargestellten Ausführungsbeispiele näher erläutert. Es zeigt dabei
- Fig. 1: eine perspektivische Darstellung des erfindungsgemäßen Heizungsthermostats,
- Fig. 2: eine weitere Ausführungsform des Heizungsthermostats aus Figur 1 in Draufsicht
- Fig. 3: eine schematische Darstellung eines Heizungssystems mit insgesamt drei Heizkreisen in dem das erfindungsgemäße Heizungsthermostat zum Einsatz kommt.

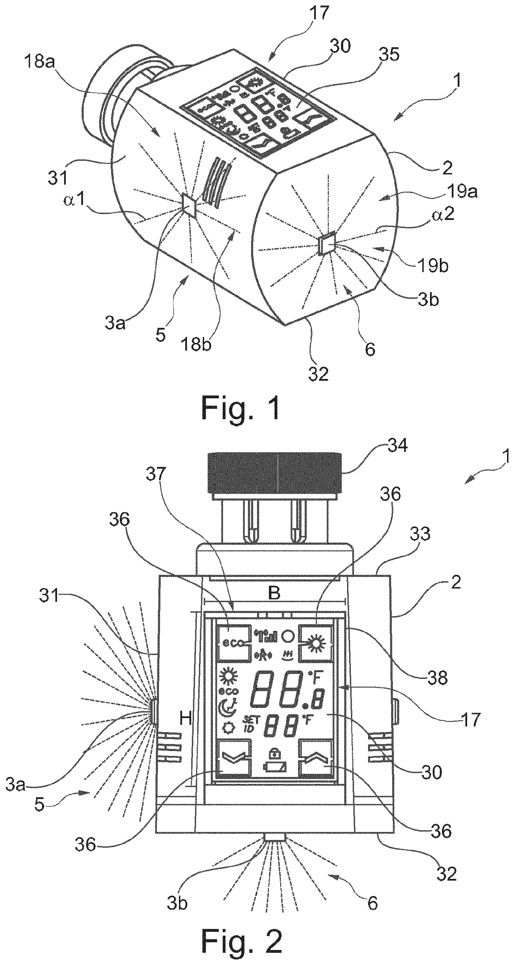

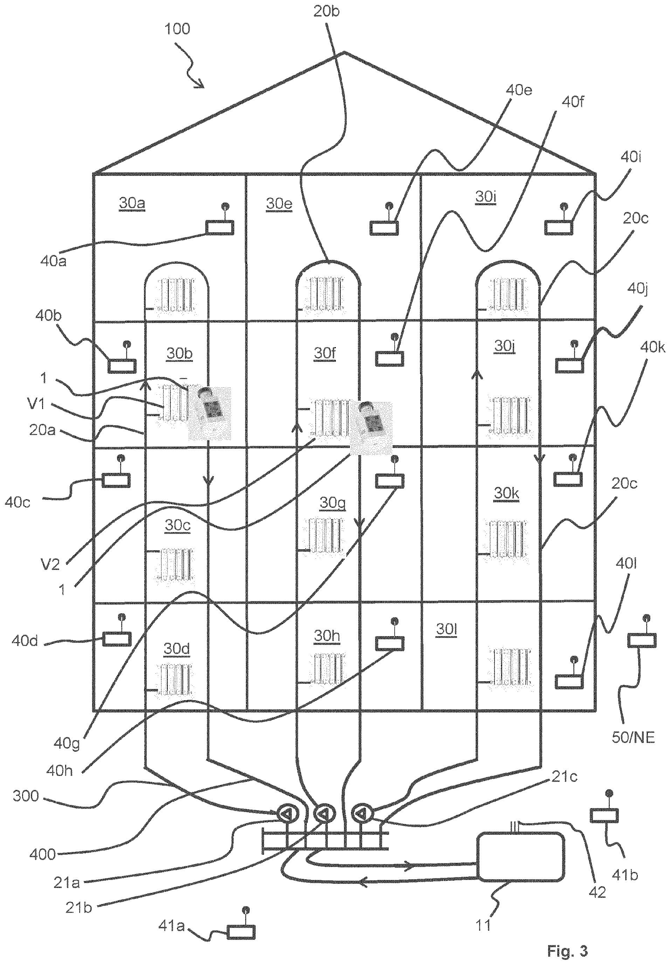

Figur 1 zeigt eine perspektivische Darstellung des erfindungsgemäßen Heizungsthermostats 1. Dieses weist ein Gehäuse 2 auf, in das ein interaktiver, berührungsempfindlichen Bildschirm 30 eingesetzt ist. Im Ausführungsbeispiel der Figur 1 ist der Bildschirm 30 oberseitig am Heizungsthermostat 1 eingesetzt. Der Benutzer des Heizungsthermostats 1 kann somit aus einer stehenden Position heraus den Bildschirm 30 vollständig einsehen. Der Vorteil eines berührungsempfindlichen Bildschirms 30, auch als Touchscreen bezeichnet ist, dass hier sämtliche Bedienelemente auf einem grafischen Interface 35 dargestellt und durch den Benutzer durch einfache Berührung der jeweiligen Oberflächenbereiche angesteuert werden können. Gleichzeitig wird auf dem berührungsempfindlichen Bildschirm 30 der Inhalt der jeweiligen Benutzungsoberfläche bzw. der darunterliegenden Funktionalitäten angezeigt. Über den berührungsempfindlichen Bildschirm 30 kann beispielsweise eine Einstellung der gewünschten Raumtemperatur erfolgen. Des Weiteren besteht auch die Möglichkeit, dass über den Bildschirm 30 eine Steuerung des gesamten Heizungssystems 100 (vgl. Fig. 3) oder die Einstellung von SOLL-Werten für die Raumtemperatur durchgeführt wird. Gleichzeitig dient der berührungsempfindlichen Bildschirm 30 als Einstellungsoberfläche, beispielsweise für die Funktionalität der beiden Sensoren 3a, 3b, die seitlich am Gehäuse 2 des Heizungsthermostats 1 angeordnet sind. Im Ausführungsbeispiel ist ein erster Sensor 3a auf einer längsseitigen Seitenfläche 31 des Heizungsthermostats 1 angeordnet. Der Erfassungsbereich 5 ist in Figur 1 schematisch dargestellt. Der Erfassungsbereich 5 ist hier nach Art einer gedachten Halbkugel oder Punktewolke im Umfeld des Sensor 3a ausgebildet, die sich von dem Sensor 3a in sämtliche Raumrichtungen erstreckt und daher einen sehr weiten Erfassungsbereich 5 zur Verfügung stellt. Ein zweiter Sensor 3b ist auf der Stirnseite 32 des Heizungsthermostats 1 angeordnet und hat ebenfalls einen Erfassungsbereich 6 der sich in Form einer gedachten Halbkugel oder Punktewolke um den Sensor 3b erstreckt und durch die Stirnseite 32 des Heizungsthermostat 1 nicht begrenzt wird. Die beiden Erfassungsbereiche 5, 6 weisen im Ausführungsbeispiel der Figur 1 Erfassungswinkel α1 und α2 von jeweils 180° auf. In der Einbausituation, beispielsweise an einem Heizkörper mit einer in den Raum weisenden Stirnseite 32 des Heizungsthermostats 1 und einer parallel zum Heizkörper (nicht dargestellt) ausgerichteten Seitenfläche 31 des Heizungsthermostats 1 ergänzen sich die Erfassungsbereiche 5, 6 der Sensoren 3a, 3b und erlauben eine Erfassung der jeweiligen Umgebung des Heizungsthermostats 1 mit einem kombinierten Erfassungswinkel von mehr als 270°.

Die beiden Sensoren 3a, 3b weisen im Ausführungsbeispiel getrennte Überwachungsebenen 18a, 18b, 19a, 19b auf. Diese teilen die Erfassungsbereiche 5, 6 in einen oberen und einen unteren Erfassungsbereich. Die Sensoren 3a, 3b sind dabei derart eingestellt, dass nur wenn in allen Überwachungsebenen 18a, 18b, 19a, 19b Bewegung detektiert wird, eine Aktivierung des Heizungsthermostats 1 erfolgt. Auf diese Art und Weise wird verhindert, dass beispielsweise bei im überwachten Raum umherlaufenden Haustieren eine Aktivierung des Heizungsthermostats 1 und eine Erhöhung der Raumtemperatur durchgeführt wird.

Der berührungsempfindlichen Bildschirm 30 ist gleichzeitig eine Eingabeeinheit 17 für verschiedene, vordefinierte Parameter, beispielsweise für die Einstellung einer SOLL-Temperatur, verschiedener Betriebszeiten oder für die Auswahl von Betriebsprogrammen. Gleichzeitig kann der berührungsempfindliche Bildschirm 30 auch als Eingabeeinheit 17 verwendet werden, um die Steuerung eines Heizungssystems 100 mit mehreren gleichartigen Thermostaten 1 vorzunehmen.

Figur 2 zeigt das zuvor beschriebene Heizungsthermostat 1 in der Draufsicht. Deutlich erkennbar ist hier die Eingabeeinheit 17, die durch den berührungsempfindlichen Bildschirm 30 zur Verfügung gestellt wird. Dieser ist bündig im Gehäuse 2 eingesetzt. Der berührungsempfindlichen Bildschirm 30 weist im Ausführungsbeispiel eine Breite B von 3,2 cm und eine Höhe H von 4,3 cm auf. Diese Größe erlaubt zum einen den Einsatz in einem Gehäuse 2, das dem Gehäuse eines Standardthermostats ohne Eingabeeinheit 17 entspricht, zum anderen stellt diese Größe des Bildschirms 30 auch sicher, dass die dort dargestellten Symbole 37 und Bedienfelder 36 für den Benutzer gut erkennbar und auch eindeutig bedienbar sind.

Das Heizungsthermostat 1 weist im Ausführungsbeispiel an seiner Oberseite 33 Anschlussmittel 34 auf, über die das Heizungsthermostat 1 in einfacher Art und Weise an bestehende Heizkörper angebunden werden kann. Es kann so ein einfacher Austausch gegen herkömmliche Heizungsthermostate erfolgen und ein digitales System zur Parametererfassung und Steuerung eines Heizkörpers und bei Vernetzung der Heizungsthermostate 1 eines Heizungssystems 100 zur Verfügung gestellt werden. Die Anschlussmittel 34 sind als Schraubverbindung ausgeführt. Im Inneren des Gehäuses 2 befindet sich ein Stellmotor, der auf das Heizkörperventil wirkt und schrittweise und bevorzugt automatisch eine Öffnung bzw. ein Schließen des Ventils vornimmt. Der Stellmotor wird dabei über die im Heizungsthermostat 1 vorgesehene Steuereinheit (nicht dargestellt) angesteuert. Auch das in Figur 2 dargestellte Heizungsthermostat 1 weist insgesamt zwei Sensoren 3a, 3b auf, die zum einen an der Stirnseite 32 sowie einen in einer Seitenfläche 31 des Gehäuses 2 eingebaut sind. Die Erfindung ist nicht auf die Ausführungsform mit zwei Sensoren 3a, 3b beschränkt. Selbstverständlich können auch drei und mehr Sensoren in geeigneten Positionen am Gehäuse 2 vorgesehen werden. Aufgrund der Anordnung von wenigstens zwei Sensoren 3a, 3b ist es irrelevant, in welcher Ausrichtung das Heizungsthermostat 1 an einem Heizkörper angeordnet wird. Durch die Kombination der beiden Sensoren 3a, 3b und die Überlappung der Erfassungsbereiche 5, 6 im Umfeld des Heizungsthermostats 1 wird ein sehr großer Erfassungsbereich für Umgebungsparameter und somit eine optimale Raumüberwachung erreicht. Möglich und denkbar ist es selbstverständlich auch einen dritten Sensor (nicht dargestellt) auf der ersten gegenüberliegenden Seitenfläche 38 des Gehäuses 2 einzubauen, um eine noch größere Abdeckung des zu überwachenden Raums zu erreichen. Die Steuereinheit ist darauf ausgerichtet, die Sensoren 3a, 3b bzw. deren Erfassungsbereiche 5, 6 derart aufeinander abzustimmen, dass der größtmögliche kombinierte Erfassungsbereich 5, 6 sichergestellt ist. Die Einstellung der Erfassungsbereiche 5, 6 kann, wie bereits ausgeführt, entweder automatisch oder durch händische Eingabe über die Eingabeeinheit 17, d. h. den berührungsempfindlichen Bildschirm 30 erfolgen.

Figur 3 zeigt ein Heizungssystem 100 mit mehreren Verbrauchern V1, V2 ..., im Ausführungsbeispiel Heizkörper, die jeweils mit einem wie zuvor beschriebenen Heizungsthermostat 1 ausgestattet sind. In Figur 3 wird die Verbindung von Verbrauchern V1, V2 und Heizungsthermostat 1 exemplarisch und stark schematisiert in zwei Beispielen dargestellt. Die Ausgestaltung kann aber auf sämtliche im Heizungssystem 100 vorgesehenen Verbraucher V1, V2 übertragen werden, d.h. jeder der hier dargestellten Heizkörper ist mit einem erfindungsgemäßen Heizungsthermostat 1 ausgestattet. Das Heizungssystem 100 weist insgesamt drei separate Heizstränge 20a, b, c auf. Im Heizungssystem 100 ist ein Wärmeerzeuger 11 vorgesehen, der die für die einzelnen Verbraucher V1, V2 ... benötigte Wärme zur Verfügung stellt. Den Heizsträngen 20a, b, c sind jeweils Pumpen 21a, b, c zugeordnet. Jeder der Heizstränge 20a, b, c versorgt eine Anzahl von Wohnungen 30a-l mit Wärme. In den Wohnungen 30 a-l sind die Verbraucher V1, V2 schematisiert Heizkörper dargestellt. Selbstverständlich können die Verbraucher V1, V2 auch in Form einer Fußbodenheizung ausgebildet sein. Beide Formen sind von der Erfindung umfasst und werden durch das erfindungsgemäße Heizungsthermostat 1 gesteuert. Jedem der Verbraucher V1 ist eine Steuereinheit 40a-l zugeordnet. Diese ist jeweils mit einem Heizungsthermostat 1 gekoppelt. Im Heizungsthermostat 1 ist zudem eine Erfassungsvorrichtung für die IST-Temperatur im jeweiligen Raum vorgesehen.

Die Erfassungsvorrichtung erfasst den aktuellen IST-Wert der Raumtemperatur und gibt diesen an die Steuereinheit 40a-l weiter. In der Steuereinheit 40a-l sind SOLLWerte für die jeweilige Raumtemperatur abgelegt. Die Steuereinheit 40a-l gleicht den gemessenen IST-Wert mit dem abgelegten SOLL-Wert ab und leitet daraus einen Ventilstellungswert ab. Dieser Ventilstellungwert wird anschließend an das Heizungsthermostat 1 ausgegeben, das darauf hin mittels einer im Heizungsthermostat 1 vorgesehenen Stellmotors eine Verstellung eines im Heizungsthermostat 1 vorgesehenen Stellantriebes bewirkt. Hierdurch wird der Volumenstrom des Heizmediums, dass über die Vorlaufleitung 300 zugeführt wird entweder gedrosselt oder erhöht, so dass es letztlich zu einer Einstellung des gewünschten SOLL-Wertes für die Temperatur kommt. Die Steuereinheit 40a-l berechnet dabei den Ventilstellungswert als Ableitung aus der Abweichung zwischen SOLL- und IST-Wert.

Die Betätigung des Stellantriebes des Heizungsthermostats 1 zur Einstellung des Ventilstellungswertes erfolgt über die Steuer- und Rückkopplungselektronik. Nach Erreichen des errechneten Ventilstellungswertes wird dieser an die Steuereinheit 40a-l zurückgegeben und dort gespeichert. Die zuvor beschriebenen Schritte werden solange wiederholt, bis der SOLL-Wert für die Raumtemperatur erreicht wird. Durch kontinuierlichen Abgleich innerhalb einstellbarer Zeitintervalle wird somit sichergestellt, dass der SOLL-Wert im jeweiligen Raum gehalten wird.

Wie aus Figur 3 ersichtlich sind in jedem Heizstrang 20a, b, c mehrere Steuereinheiten 40a-l angeordnet, die jeweils auf die entsprechenden Heizungsthermostaten 1 wirken bzw. mit diesen gekoppelt sind. Im Heizungssystem 100 erfolgt dadurch ein adaptiver hydraulischer Abgleich über das gesamte Heizungssystem hinweg, wobei die Heizungsthermostate 1 hierbei eine zentrale Rolle als Erfassungs- und Steuerorgane einnehmen, die durch datentechnische Kopplung untereinander und in Rückkopplung mit den Steuereinheiten 40a-l den Abgleich über das gesamte Heizungssystem 100 realisieren. Die Verbraucher V1, V2 der einzelnen Heizstränge 20a, b, c können damit temperaturabhängig gesteuert werden, sodass die zur Verfügung gestellte Wärmemenge optimal auf die Verbraucher V1 verteilt werden kann. In sämtlichen Räumen wird somit ein gleichmäßiges Temperaturprofil erzielt. Die Steuereinheiten 40a-l können bedarfsweise auch auf Steuereinheiten 41a, b der Pumpen 21a, b, c bzw. des Wärmeerzeugers 11 zugreifen und die Pumpleistung bzw. die zur Verfügung gestellte Wärmemenge bedarfsorientiert anpassen bzw. drosseln. Sämtliche Verbraucher V1, V2 eines Heizstrang 20a, b, c sind über die Vorlauf- 300 bzw. Rücklaufleitung 400 miteinander verbunden. Die Steuereinheiten 40a-l bzw. die Heizungsthermostate 1 können auch mit einem zentralen Server 50 verbunden werden, der den systemweiten Abgleich und die entsprechende Steuerung der Heizungsthermostate 1 direkt oder über die Steuereinheiten 40a-l übernimmt. Die somit zur Verfügung gestellte Netzsteuereinheit NE verarbeitet dabei die durch die jeweiligen Steuereinheiten 40a-l der Heizstränge 20a, b, c und/oder die Heizungsthermostate 1 erfassten Werte und berechnet die auszugebenden Ventilstellungswerte, die dann über die Steuereinheiten 40a-l in den jeweiligen Gebäudeeinheiten bzw. Wohnungen 30a-l umgesetzt werden. Die erfindungsgemäßen Heizungsthermostate 1 sind dabei entweder mit den jeweiligen Steuereinheiten 40a-l oder der Netzsteuereinheit NE datentechnisch, bevorzugt kabellos gekoppelt und werden von diesen jeweils einzeln oder gruppenweise angesteuert. Durch die Bündelung der Informationen aus den Steuereinheiten 40a-l der einzelnen Gebäudeeinheiten kann auf einfache Art und Weise über die Netzsteuereinheit NE ein adaptiver hydraulischer Gesamtabgleich über das Heizungssystem 100 durchgeführt und die Leistung bzw. der Lastanfall an den einzelnen Verbrauchern V1, V2 derart optimiert und abgeglichen werden, dass im gesamten Heizungssystem 100 ein automatischer, adaptiver hydraulischer Abgleich vorgenommen werden kann. Dieser kann dynamisch und ohne mechanischen Abgleich an einzelnen Heizungsthermostaten 1 vorgenommen werden. Über die Steuereinheiten der Pumpen 21a, b, c bzw. des Kessels 11 kann die Leistung dieser Elemente in den Abgleich einbezogen bzw. die Leistung angepasst werden. Alternativ kann an den Pumpen 21a, b, c und/oder dem Kessel 11 eine Schnittstelle 42 zur Einbindung in das Heizungssystem 100 über die Steuereinheiten 40a-l oder die Netzsteuereinheit NE vorgesehen werden.

Als weitere Einflussgrößen bei der Durchführung des adaptiven hydraulischen Abgleichs können beispielsweise der Verbauungsort der jeweiligen Heizungsthermostate 1 bzw. der Verbraucher V1, V2 im Heizungssystem 100, die Position des Heizungssystems 100 in einem Heizstrang 20a, b, c oder einer übergeordneten Heizungsanlage und/oder ein Maß für die Umgebungstemperatur zum Zeitpunkt der Festlegung des Öffnungswert des Heizungsventils in die Berechnung einfließen. Daneben können auch Informationen dahingehend, wie das Heizungssystem 100 aufgebaut ist berücksichtigt werden. Ebenfalls möglich ist eine Berücksichtigung der Information dahingehend, wie sich der Lastanfall im Heizungssystem 100 verhält und/oder zumindest auszugsweise Planungsdaten für die Heizstränge 20a, b, c oder das zu beheizende Gebäude oder den zu beheizenden Raum und/oder eine Information über die im Heizungssystem 100 vorhandene und miteinander gekoppelten erfindungsgemäßen Heizungsthermostate 1. Auch in die Berechnung des Ventilstellungswertes, der notwendig ist, um eine SOLL-Temperatur zu erreichen, kann einfließen, zu welchem Anteil eine Gesamtwärmemenge oder ein Druckanfall im Heizungssystem 100 am jeweiligen Verbraucher V1, V2 zur Verfügung steht oder zur Verfügung gestellt werden kann und/oder eine Information dahingehend, welche Maximalleistung der dem Heizungssystem 100 zugeordnete Brenner 11 oder die dem Heizungssystem 100 zugeordneten Wärmepumpen 21a, b, c zur Verfügung stellen können.

## Patentansprüche

1. Heizungsthermostat (1) umfassend an oder in einem Gehäuse (2) angeordnet:
- eine als interaktiver, berührungsempfindlicher Bildschirm (30), insbesondere Touchscreen, ausgebildete Eingabeeinheit (17),
- wenigstens zwei Sensoren (3a, 3b) mit Erfassungsfeldern zur Erfassung von Umgebungsparametern des Heizungsthermostats (1),
- eine Datenverarbeitungseinheit,
- eine Steuereinheit und
- eine Erfassungseinheit für Heizungsparameter einer dem Heizungsthermostat (1) unmittelbar zugeordneten Heizeinheit, insbesondere eines Heizkörpers und/oder einer Fußbodenheizung und/oder eines übergeordneten Heizungssystems,
wobei die Sensoren (3) relativ zur Eingabeeinheit (17) bzw. dem Bildschirm (30) derart angeordnet sind, dass unabhängig von einer Einbaulage des Heizungsthermostats (1), die Erfassungsfelder so ausgerichtet sind, dass eine im Wesentlichen vollständige Erfassung aller Umgebungsparameter erfolgt.

2. Heizungsthermostat (1) nach Anspruch 1, **dadurch gekennzeichnet, dass** eine Steuerung der Temperaturregelung des Heizkörpers und/oder der Fußbodenheizung oder des übergeordneten Heizungssystem basierend auf den erfassten Heizungs- und Umgebungsparametern vorgesehen ist.

3. Heizungsthermostat (1) nach Anspruch 1 oder 2, **dadurch gekennzeichnet, dass** der interaktive, berührungsempfindliche Bildschirm (30) eine Größe von zwischen 3 cm x 5 cm, bevorzugt 3,2 cm x 4,3 cm aufweist.

4. Heizungsthermostat (1) nach einem der vorhergehenden Ansprüche, **dadurch gekennzeichnet, dass** die Erfassungsfelder Erfassungsbereiche (5, 6) mit einem Erfassungswinkel relativ zur Eingabeeinheit (17) aufweisen, und Erfassungswinkel von zwischen 0° und 360°, insbesondere zwischen 1° und 180° vorgesehen sind, wobei bevorzugt eine wenigstens teilweise Überlappung der Erfassungsbereiche (5, 6) der wenigstens zwei Sensoren (3a, 3b) vorgesehen ist und/oder die Erfassungsbereiche (5, 6) derart abstimmbar sind, dass sich ein einziger Erfassungsbereiche (5, 6) mit einem Erfassungswinkel (α1, α2) relativ zur Eingabeeinheit (17) von zwischen 0° und 360°, insbesondere zwischen 1° und 180° ergibt, wobei die Abstimmung bevorzugt über die Steuereinheit insbesondere kontinuierlich oder als einmalige, insbesondere automatische Konfiguration nach einer Erstinbetriebnahme erfolgt.

5. Heizungsthermostat (1) nach einem der vorhergehenden Ansprüche, **dadurch gekennzeichnet, dass** die Sensoren (3a, 3b) als Bewegungssensoren, Infrarotsensoren, Radarsensoren, Temperatursensoren oder Ultraschallsensoren ausgebildet sind, wobei die die Sensoren (3a, 3b) insbesondere zwei getrennte Überwachungsebenen (18a, 18b, 19a, 19b) aufweisen und/oder über die Sensoren (3a, 3b) eine Bewegungsüberwachung eines Raums erfolgt.

6. Heizungsthermostat (1) nach einem der vorhergehenden Ansprüche, **dadurch gekennzeichnet, dass** in dem Gehäuse (2) wenigstens ein manuell oder automatisch aktivierbares Kameramodul zur Raumüberwachung vorgesehen ist.

7. Heizungsthermostat (1) nach einem der vorhergehenden Ansprüche, **dadurch gekennzeichnet, dass** über die Eingabeeinheit (17) eine Steuerung der unmittelbar zugeordneten Heizungseinheit und/oder des übergeordneten Heizungssystems erfolgt.

8. Heizungsthermostat (1) nach einem der vorhergehenden Ansprüche, **dadurch gekennzeichnet, dass** in der Datenverarbeitungseinheit eine Verarbeitung der von den Sensoren (3a, 3b) erfassten Umgebungsparameter und von der Erfassungseinheit erfassten Heizungsparameter erfolgt und ein automatischer Abgleich mit voreinstellbaren Heizungsparametern der dem Heizungsthermostat (1) unmittelbar zugeordneten Heizeinheit, und/oder des übergeordneten Heizungssystems durchgeführt wird oder die Datenverarbeitungseinheit die über das Heizungsthermostat (1) erfassten Umgebungs- und Heizungsparameter, insbesondere beim Betrieb der Raum- oder Fußbodenheizung, an eine übergeordnete Steuereinheit als Eingangswerte für die Durchführung eines adaptiven hydraulischen Abgleichs weitergibt, wobei die übergeordnete Steuereinheit insbesondere mit dem Heizungsthermostat (1) bevorzugt kabellos kommuniziert oder die übergeordnete Steuereinheit in das Heizungsthermostat (1) integriert vorgesehen ist und die Steuerung des adaptiven hydraulischen Abgleichs im Heizungssystem über das Heizungsthermostat (1) erfolgt.

9. Heizungsthermostat (1) nach einem der vorhergehenden Ansprüche, **dadurch gekennzeichnet, dass** das Heizungsthermostat (1) als Teil eines einen adaptiven hydraulischen Abgleich zulassenden Heizungssystems vorgesehen ist und über die Eingabeeinheit (17) die Eingabe von Eingangsparametern für den bevorzugt automatischen adaptiven hydraulischen Abgleichs erfolgt.

10. Heizungsthermostat (1) nach einem der vorhergehenden Ansprüche, **dadurch gekennzeichnet, dass** in der Steuereinheit wenigstens zwei Benutzungsebenen hinterlegt sind und die Auswahl, der Zugriff und/oder die Bearbeitung der jeweiligen Benutzungsebenen über den berührungsempfindlichen Bildschirm (30) der Eingabeeinheit (17) erfolgt, wobei die Steuerung des Heizungsthermostat (1) bevorzugt wahlweise über den berührungsempfindlichen Bildschirm (30) der Eingabeeinheit (17) oder eine gesonderte, auf einem Mobilgerät oder Computer installierte Nutzerapplikation oder eine Weboberfläche erfolgt.

11. Heizungsthermostat (1) nach einem der vorhergehenden Ansprüche, **dadurch gekennzeichnet, dass** eine kabellose Kopplung des Heizungsthermostates (1) mit weiteren Heizungsthermostaten (1), mit der übergeordneten Steuereinheit und/oder dem Mobilgerät oder Computer über ein im Heizungsthermostat (1) integriertes Kommunikationsmodul, insbesondere W-LAN-, Funk-, oder Bluetoothmodul oder dergleichen, vorgesehen ist, und/oder im Heizungsthermostat (1) eine Speichereinheit für ermittelte Nutzungsdaten, wie zum Beispiel Betriebsdauer, eingestellte Temperaturen, Temperaturverlauf, Wärmeverbrauch, Nutzerprofile, Außentemperatur, Anwesenheits- bzw. Abwesenheitsdauer eines Nutzers vorgesehen ist und/oder eine Bedienung des Heizungsthermostats (1) über eine Sprach- und/oder Gestensteuerung vorgesehen ist und im Heizungsthermostat (1) wenigstens ein entsprechender Erfassungssensor vorgesehen ist.

12. Heizungssystem (100) aufweisend mehrere Verbraucher und wenigstens ein den Verbrauchern jeweils zugeordnetes Heizungsthermostat (1) gemäß einem der Ansprüche 1 bis 11, wobei die Verbraucher (V1, V2) getrennt voneinander und/oder in getrennten Räumen angeordnet sind und eine Kopplung mit einer zentralen Steuereinheit oder über eine jeweils den Verbrauchern zugeordnete Steuereinheit (40a-l) oder eine Gateway bzw. eine Server (50) vorgesehen ist.

13. Heizungssystem (100) nach Anspruch 12, **gekennzeichnet durch** ein mehrere Abschnitte aufweisendes Verteilnetz, wobei die Abschnitte unabhängige Heizsträngen (20a, 20b, 20c) mit jeweils wenigstens einem Heizungssystem (100) aufweisen wobei das Verteilnetz bevorzugt wenigstens eine Netzsteuereinheit (NE) für einen adaptiven, dynamischen hydraulischen Abgleich im gesamten Verteilnetz aufweist, wobei die Netzsteuereinheit (NE) unmittelbar über die Steuereinheiten (40a-l) der jeweiligen Heizsysteme (100) oder über die zentralen Steuereinheiten steuert und wenigstens ein Heizungsthermostat (1) als Netzsteuereinheit vorgesehen ist.

14. Heizungssystem (100) nach einem der Ansprüche 12 oder 13, **dadurch gekennzeichnet, dass** in der Netzsteuereinheit, den zentralen Steuereinheiten (ZE) und/oder den Steuereinheiten (40a-l) ein thermische Zeitverhalten über abrufbare SOLL-Wert-Profile einstellbar ist und der adaptive hydraulische Abgleich in Abhängigkeit von den SOLL-Wert-Profilen durchführbar ist und wobei SOLL-Wert-Profile über die Eingabeeinheit (17), insbesondere den interaktiven, berührungsempfindlichen Bildschirm (30) des Heizungsthermostats (1) erfassbar und/oder steuerbar sind.

15. Heizungssystem (100) nach einem der Ansprüche 12 bis 14, **dadurch gekennzeichnet, dass** eine Kopplung von mehreren Heizungsthermostaten (1) miteinander kabellos, insbesondere über W-LAN, Funk, Bluetooth oder ein Telefon- oder Mobilfunknetz vorgesehen ist.
